# EUROPEAN PATENT SPECIFICATION

(11) **EP 1 069 561 B1**
(45) Date of publication and mention of the grant of the patent: **04.10.2006**
(21) Application number: 00113990.6
(22) Date of filing: 01.07.2000
(51) Int. Cl.: G11B 19/28

(54) **Disc speed control device**
Plattengeschwindigkeitssteuervorrichtung
Dispositif de commande de vitesse de disque

(30) Priority: 13.07.1999 EP 99401755
(43) Date of publication of application: 17.01.2001
(73) Proprietor: DEUTSCHE THOMSON-BRANDT GMBH, 78048 Villingen-Schwenningen (DE)
(72) Inventor: Mahr, Peter, 78126 Weiler (DE)
(74) Representative: Thies, Stephan

(56) References cited:
- EP-A- 0 878 795
- US-A- 5 051 976
- PATENT ABSTRACTS OF JAPAN vol. 1998, no. 09, 31 July 1998 (1998-07-31) & JP 10 106136 A (SANYO ELECTRIC CO LTD), 24 April 1998 (1998-04-24)

## Description

The invention relates to a playing and/or recording device for a disc shaped information carrier, and more precisely to a disc speed control device.

A playing and/or recording device for a disc shaped carrier is known to adjust the disc rotation speed depending on the nature of the disc. Typically two modes are used, namely Constant Angular Velocity and Constant Linear Velocity mode.

In CAV mode the disc is rotated at a constant rotation speed. This is for example the case for Compact Disc-ROM devices which are of widespread use as computer peripherals. In a start phase after the disc has been inserted in the CD-ROM player and is ready to be read, a leading value output means generates a determined start rotation speed value. This value is output to speed servo means which regulate disc actuating means such to rotate the disc at the start rotation speed. An instantaneous disc rotation speed may be obtained from a frequency signal which is generated by frequency generating means. The frequency generating means may for example be realized by a device which is directly measuring the rotations of a motor shaft in the disc actuating means. The speed servo means receive the frequency signal, compare the determined start rotation speed with the instantaneous disc rotation speed calculated from the frequency signal, and consequently regulate the disc actuating means such that the disc keeps rotating at the determined start rotation speed. Any other speed may now be adjusted by using the leading value output means.

Disc players and/or recording devices typically comprise a pick up which may be moved relative to the rotating disc in order to be positioned for reading and/or recording data at a determined location of the disc. In optical disc player for example the pick up comprises optical means which receive light reflected by the disc and project it on light detecting means. This way an output of the light detecting means is indicative of data scanned by the reflected light. The data may for example be recorded along tracks. The tracks form circles or a spiral having a center substantially located at a center of the disc rotation.

In CLV mode the disc is rotated such that data being read and/or recorded using the pick-up appears to be passing by the pick-up at a constant speed. This means that the disc rotation speed is actually higher when the pick-up accesses data near the center of the disc than when it accessed data near a periphery of the disc. This is for example the case in audio Compact Disc players. The disc rotation speed must be adjusted depending on where on the disc the pick-up is to access data. Typically an output of the pick-up, i.e., an output of the light detecting means is processed using signal processing means and a data frequency signal showing at which frequency data is read by the pick-up is obtained. The data frequency signal is compared to a desired frequency corresponding to a determined linear velocity and a speed servo circuit regulates the disc actuating means in a known manner such that the disk rotations speed remains adapted to have a data frequency signal substantially equal to the desired frequency.

Many players and/or recording devices for disc shaped carriers have the possibility to function in either the CAV or CLV mode. In order to realize this compatibility to CAV and CLV it is known to either have two distinct circuits for CAV and CLV or to modify the speed servo circuit of either one such that it may perform in both modes. The latter solution requires a relative high degree of complexity in the modified speed circuit. The former solution requires that in addition to the two distinct circuits, a possibility to switch between both circuits when appropriate be included. Such a device is disclosed by EP-A-878795

It is an object of the present invention to eliminate the need for two distinct circuits which perform CAV or CLV.

It is another object of the present invention to lower the complexity of a speed servo circuit in a device performing CAV and CLV.

A disc speed control device according to the invention is for use in a player and/or recorder of a disc shaped information carrier to be recorded or recorded with data along data tracks, the data being read and/or recorded using a pick-up, and comprises frequency generating means for generating a frequency signal having a frequency representative of a rotation speed of the disc, disc actuating means for rotating the disc, leading value output means for generating a determined rotation speed value, speed servo means which receive the frequency signal and the determined rotation speed value, and which regulate the disc actuating means to the determined rotation speed value, signal processing means which process an output of the pick-up when the data is being read and deliver a data frequency signal, and speed processing means which receive and use the data frequency signal to compute the determined rotation speed value.

The invention will in the following be explained using examples and Figures, wherein
- Fig. 1: contains a schematic speed regulating circuit according to the prior art,
- Fig. 2: contains a schematic speed regulating circuit according to the invention,
- Fig. 3: illustrates a preferred embodiment of the invention.

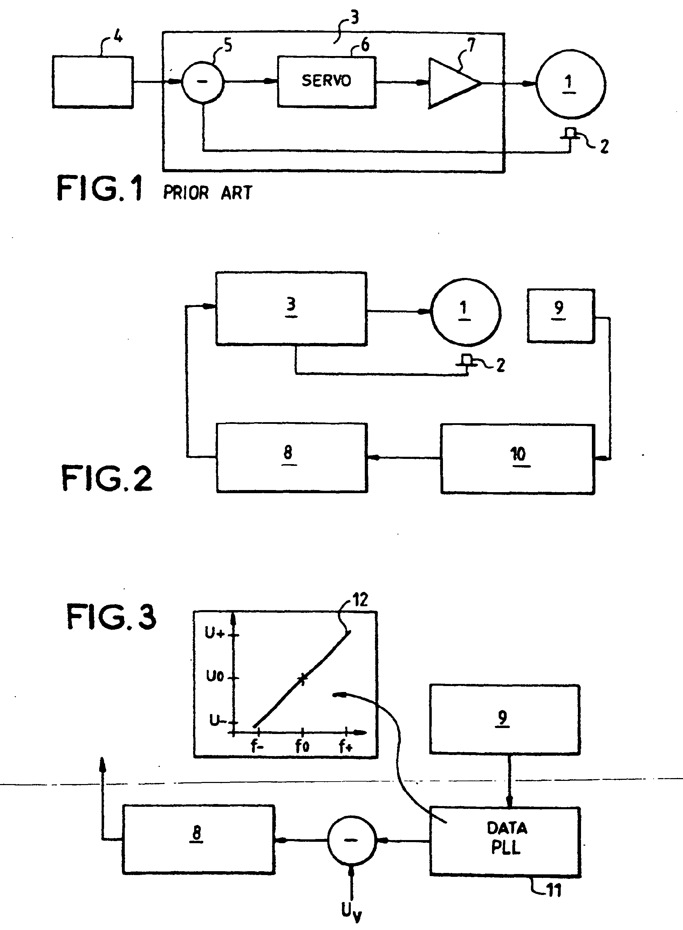

Fig.1 shows a schematic representation of known disc actuating means 1 which are used to rotate a disc shaped data carrier (not shown). A frequency generating means 2 measures for example the rotations of a motor shaft (not shown) which rotates in the disc actuating means 1. The frequency generating means 2 thereby generate a frequency signal which has a frequency representative of a rotation speed of the disc, and transmit this to speed servo means 3.

A leading value output means 4 generates a determined rotation speed value which is transmitted to the speed servo means 3. The determined rotation speed value corresponds to a desired rotation speed in CAV mode.

The speed servo means 3 comprises a comparator means 5 which receives both the frequency signal and the determined rotation speed value, compares both inputs and delivers the result of the comparison to a regulating means 6. The regulating means 6 outputs a regulating signal to the disc actuating means 1 through an amplifier 7 such that a rotation of the disc shaped data carrier at the determined rotation speed value is obtained. This means that the disc actuating means will accelerate or decelerate the disc rotation depending on respectively if the frequency signal indicates an instantaneous speed smaller or greater than the determined rotation speed value. Hence a CAV mode operation is achieved because the disc rotating is regulated at a constant determined rotation speed.

In Fig. 2, the determined rotation speed value is provided to the speed servo means 3 by speed processing means 8. A pick-up 9 is used to read data from the rotating disk shaped carrier (not shown) and delivers to a signal processing means 10 a signal representative of the data scanned from the disc. The signal processing means 10 allows to generate a data frequency signal which depends on the frequency at which data is scanned by the pick-up, i.e., on the linear velocity at which the disc passes by the pick-up 9. The speed processing means 8 receives the data frequency signal and computes the determined rotation speed value. In case a CLV mode is to be achieved, the determined rotation speed value will depend on the location of the disc at which the pick-up 9 reads the data. The speed servo means 3 then regulates the disc actuating means 1 to rotate the disc at the determined rotation speed value.

To read includes reading data stored in the form of pits in the form of depressions or elevations, dark or bright areas, areas differing in other physical properties as for example magnetic properties, optical properties, electrical properties or geometric properties, like a differently wobbled track. In case of a recording device, data is also read during a recording process. For example during following the track prerecorded areas in the form of pits or wobble information are read and evaluated, even when recording is performed.

The described example in fact acts as a system of two loops: an inner loop comprising the speed servo means 3, the disc actuating means 1 and the frequency generating means 2, and receiving a determined rotation speed value at its input. The second loop may be called outer loop or control loop and provides the determined rotation speed value to the input of the inner loop.

The outer loop and more precisely the speed processing means 8 which is part of it, may typically provide processing of the data frequency signal for achieving CLV mode.

In a preferred embodiment, the outer loop may also provide processing for one or many of the following situations:
a) Constant speed value. In this situation, the speed processing means output or constant value for the determined disc rotation speed. Such a situation occurs for example in a start phase when the disc is inserted in the player and/or recorder, or in CAV mode when the player is used as a CD-ROM drive;
b) Freeze the instantaneous speed in case of error. This situations occurs, for example, when the signal processing means 10 are not in a state to deliver a data frequency signal because data on the disc is unreadable. The speed processing means registers the absence of the data frequency signal and outputs a speed value which was stored previous to the occurrence of an error. This way, the rotation speed may be controlled until the pick-up 9 scans readable data and a data frequency signal is generated again.
c) Generate a speed profile in case of jumps or smooth acceleration. This situation may, for example, occur when data is read in CLV mode and the pick-up is moved towards the periphery of the disc in a so-called jump, i.e., when many tracks are crossed to access data. The speed processing means anticipates the final rotation velocity required to read data on the accessed track and outputs the final rotation velocity as determined disc rotation speed to the inner loop during the jump while no data is read. This allows to save time. In another example, the speed servo means 8 simply generates a smooth acceleration of the disc rotation speed by successive outputing increasing speed values to the inner loop, the result being that when the disc rotates at higher speeds, data may be read at a higher rate.

Fig. 3 shows a preferred embodiment of an outer loop. A data Phase Locked Loop 11 receives an output from the pick-up 9. The data PLL 11 comprises means for generating a voltage U depending on a frequency of the read data rate which is defined as a PLL frequency f. The data PLL 11 outputs the voltage U according to a voltage curve 12. The voltage curve 12 shows that PLL frequencies f-, f0 and f+ correspond to voltage U-, U0 and U+. The speed processing means 8 receives at its input the voltage output by the data PLL 11 and a reference voltage Uv ; the input voltages are compared and depending on the result the speed processing means 8 output a higher or smaller determined disc rotation value, such that the PLL frequency remains substantially at the frequency f0. Hence a CLV mode may be achieved.

The disc speed control devices described here are given as examples only and a person skilled in the art may realize other embodiments of the invention while remaining in the scope of the invention.

The disc speed control device according to the invention is particularly advantageous in that it may easily be used for various kinds of recording and/or playing modes. This is especially useful in multi-standard disc drives which need to adjust many different disc speeds to read or record data.

## Claims

1. Disc speed control device for use in a player and/or recorder of a disc shaped information carrier to be read and/or recorded with data along data tracks using a pick-up (9), the device comprising:
- an actuating means (1) for rotating the information carrier,
- a means (2) for detecting the rotational frequency of the information carrier, which produces a frequency signal representative of a rotation frequency of the information carrier,
- a speed servo means (6) which receives the frequency signal and a determined rotation frequency value and which regulates the actuating means to the determined rotation frequency value, and
- a signal processing means (10) which processes an output of the pick-up (9) when the data is being read and which delivers a data frequency signal,
**characterized in that** it further comprises :
- a speed processing means (8) which receives and uses the data frequency signal to compute the determined rotation frequency value, the determined rotation frequency being constant when the information carrier is driven at constant angular velocity (CAV), and being dependent on the location on the information carrier where the pick-up (9) reads the data when the information carrier is driven at constant linear velocity (CLV).

2. Disc speed control device according to claim 1, wherein the signal processing means (10) comprises a data phase locked loop means (11) which outputs a voltage (U- , U0, U+) corresponding to a phase locked loop frequency (f-, f0, f+) of the rate at which data is read by the pick-up (9), and comprising a reference voltage source which delivers a reference voltage (Uv) at an input of the speed processing means (8).

3. Disc speed control device according to claim 1 or 2, wherein the speed processing means (8) outputs a constant value for the determined rotation frequency value in a start phase when the information carrier is inserted in the player and/or recorder.

4. Disc speed control device according to one of claims 1 to 3, **wherein** the speed processing means (8) freezes an instantaneous speed in the event of error.

5. Disc speed control device according to claim 4, wherein the speed processing means (8) registers an absence of the data frequency signal and outputs the determined rotation speed value which was stored previous to the occurrence of the error to control the actuating means (1) until the pick-up (9) scans readable data and the data frequency signal is generated again.

6. Disc speed control device according to one of the preceding claims, wherein the speed processing means (8) generates a speed profile in case of jumps or smooth acceleration when the data is read at CLV and the pick-up (9) is moved towards a periphery of the information carrier.

7. Disc speed control device according to claim 6, wherein the speed processing means (8) anticipates a final rotation frequency required to read the data on an accessed track and outputs the final rotation frequency as the determined rotation frequency value to the speed servo means (6) during the jump while no data is read.

8. Disc speed control device according to claim 6, wherein the speed processing means (8) generates a smooth acceleration of the determined rotation frequency value by successively outputting increasing frequency values to the speed servo means (6) so that when the information carrier rotates at higher frequencies, the data may be read at a higher rate.

9. Optical disc player and/or recorder **characterized in that** it comprises a disc speed control device according to anyone of claims 1 to 8.

## Patentansprüche

1. Plattengeschwindigkeitssteuereinrichtung zur Verwendung in einem Player und/oder Aufzeichnungsgerät eines plattenförmigen Informationsträgers, von dem entlang Datenspuren Daten gelesen und/oder darauf aufgezeichnet werden sollen, wobei ein Lesekopf (9) verwendet wird, wobei die Einrichtung folgendes umfaßt:
- ein Betätigungsmittel (1) zum Drehen des Informationsträgers,
- ein Mittel (2) zum Detektieren der Rotationsfrequenz des Informationsträgers, was ein eine Rotationsfrequenz des Informationsträgers repräsentierendes Frequenzsignal erzeugt,
- ein Geschwindigkeitsservomittel (6), das das Frequenzsignal und einen bestimmten Rotationsfrequenzwert empfängt und das das Betätigungsmittel auf dem bestimmten Rotationsfrequenzwert regelt, und
- eine Signalverarbeitungsmittel (10), das eine Ausgabe des Lesekopfs (9) verarbeitet, wenn die Daten gelesen werden, und ein Datenfrequenzsignal liefern,
**dadurch gekennzeichnet, daß** sie weiterhin folgendes umfaßt:
- ein Geschwindigkeitsverarbeitungsmittel (8), das das Datenfrequenzsignal empfängt und dazu verwendet, den bestimmten Rotationsfrequenzwert zu berechnen, wobei die bestimmte Rotationsfrequenz konstant ist, wenn der Informationsträger mit konstanter Winkelgeschwindigkeit (CAV) angetrieben wird, und von der Stelle des Informationsträgers abhängt, wo der Lesekopf (9) die Daten liest, wenn der Informationsträger mit einer konstanten Lineargeschwindigkeit (CLV) angetrieben wird.

2. Plattengeschwindigkeitssteuereinrichtung nach Anspruch 1, wobei das Signalverarbeitungsmittel (10) ein Datenphasenregelschleifenmittel (11) umfaßt, das eine Spannung (U-, U0, u+) entsprechend einer Phasenregelschleifenfrequenz (f-, f0, f+) der Rate ausgibt, mit der Daten von dem Lesekopf (9) gelesen werden, und umfassend eine Referenzspannungsquelle, die eine Referenzspannung (Uv) an einem Eingang des Geschwindigkeitsverarbeitungsmittels (8) liefert.

3. Plattengeschwindigkeitssteuereinrichtung nach Anspruch 1 oder 2, wobei das Geschwindigkeitsverarbeitungsmittel (8) einen konstanten Wert für den bestimmten Rotationsfrequenzwert in einer Startphase ausgibt, wenn der Informationsträger in den Player und/oder das Aufzeichnungsgerät eingeführt wird.

4. Plattengeschwindigkeitssteuereinrichtung nach einem der Ansprüche 1 bis 3, wobei das Plattengeschwindigkeitsverarbeitungsmittel (8) eine Istgeschwindigkeit im Fall eines Fehlers einfriert.

5. Plattengeschwindigkeitssteuereinrichtung nach Anspruch 4, wobei das Geschwindigkeitsverarbeitungsmittel (8) eine Abwesenheit des Datenfrequenzsignals registriert und den bestimmten Rotationsdrehzahlwert ausgibt, der vor dem Auftreten des Fehlers gespeichert wurde, um das Betätigungsmittel (1) zu steuern, bis der Lesekopf (9) lesbare Daten scannt und das Datenfrequenzsignal wiedererzeugt wird.

6. Plattengeschwindigkeitssteuereinrichtung nach einem der vorhergehenden Ansprüche, wobei das Geschwindigkeitsverarbeitungsmittel (8) ein Geschwindigkeitsprofil im Fall von Sprüngen oder einer sanften Beschleunigung erzeugt, wenn die Daten mit CLV gelesen werden, und der Lesekopf (9) in Richtung einer Peripherie des Informationsträgers bewegt wird.

7. Plattengeschwindigkeitssteuereinrichtung nach Anspruch 6, wobei das Geschwindigkeitsverarbeitungsmittel (8) eine Endrotationsfrequenz vorwegnimmt, die erforderlich ist, um die Daten auf einer Spur zu lesen, auf die zugegriffen wurde, und die Endrotationsfrequenz als den bestimmten Rotationsfrequenzwert an das Geschwindigkeitsservomittel (6) während des Sprungs ausgibt, während keine Daten gelesen werden.

8. Plattengeschwindigkeitssteuereinrichtung nach Anspruch 6, wobei das Geschwindigkeitsverarbeitungsmittel (8) eine sanfte Beschleunigung des bestimmten Rotationsfrequenzwerts durch nacheinander Ausgeben zunehmender Frequenzwerte an das Geschwindigkeitsservomittel (6) erzeugt, so daß, wenn sich der Informationsträger mit höheren Frequenzen dreht, die Daten mit einer höheren Rate gelesen werden können.

9. Optischer Platten-Player und/oder Aufzeichnungsgerät, **dadurch gekennzeichnet, daß** er/es eine Plattengeschwindigkeitssteuereinrichtung gemäß einem der Ansprüche 1 bis 8 umfaßt.

## Revendications

1. Dispositif de commande de vitesse de disque pour une utilisation dans un lecteur et/ou un enregistreur d'un support d'information en forme de disque devant être lu et/ou enregistré avec des données sur des pistes de données au moyen d'un capteur (9), le dispositif comprenant :
- un moyen d'actionnement (1) pour faire tourner le support d'information,
- un moyen (2) pour détecter la fréquence rotationnelle du support d'information qui produit un signal en fréquence représentatif d'une fréquence de rotation du support d'information,
- un moyen d'asservissement de la vitesse (6) qui reçoit le signal en fréquence et une valeur de fréquence de rotation déterminée, et qui régule le moyen d'actionnement à la valeur de fréquence de rotation déterminée, et
- un moyen de traitement du signal (10) qui traite une sortie du capteur (9) lorsque les données sont lues et qui fournit un signal en fréquence numérique, **caractérisé en ce qu'**il comprend en outre :
- un moyen de traitement de la vitesse (8) qui reçoit et utilise le signal en fréquence numérique pour calculer la valeur de fréquence de rotation déterminée, la fréquence de rotation déterminée étant constante lorsque le support d'information est entraîné à une vitesse angulaire constante (VAC) et étant dépendante de la position sur le support d'information à laquelle le capteur (9) lit les données lorsque le support d'information est entraîné à une vitesse linéaire constante (VLC).

2. Dispositif de commande de vitesse de disque selon la revendication 1, dans lequel le moyen de traitement du signal (10) comprend un moyen de boucle à verrouillage de phase numérique (11) qui fournit une tension (U-, U0, U+) correspondant à une fréquence de boucle à verrouillage de phase (f-, f0, f+) de la vitesse à laquelle les données sont lues par le capteur (9), et comprenant une source de tension de référence qui fournit une tension de référence (Uv) à une entrée du moyen de traitement de la vitesse (8).

3. Dispositif de commande de vitesse de disque selon la revendication 1 ou 2, dans lequel le moyen de traitement de la vitesse (8) fournit une valeur constante pour la valeur de fréquence de rotation déterminée au cours d'une phase de départ lorsque le support d'information est inséré dans le lecteur et/ou l'enregistreur.

4. Dispositif de commande de vitesse de disque selon l'une des revendications 1 à 3, dans lequel le moyen de traitement de la vitesse (8) gèle une vitesse instantanée en cas d'erreur.

5. Dispositif de commande de vitesse de disque selon la revendication 4, dans lequel le moyen de traitement de la vitesse (8) enregistre une absence du signal en fréquence numérique et produit la valeur de vitesse de rotation déterminée qui a été stockée avant la survenue de l'erreur pour commander le moyen d'actionnement (1) jusqu'à ce que le capteur (9) lise des données lisibles et que le signal en fréquence numérique soit de nouveau généré.

6. Dispositif de commande de vitesse de disque selon l'une des revendications précédentes, **dans lequel** le moyen de traitement de la vitesse (8) génère un profil de vitesse en cas de sauts ou d'accélération progressive lorsque les données sont lues en VLC et que le capteur (9) est déplacé vers la périphérie du support d'information.

7. Dispositif de commande de vitesse de disque selon la revendication 6, dans lequel le moyen de traitement de la vitesse (8) anticipe une fréquence de rotation finale requise pour lire les données sur une piste atteinte et génère la fréquence de rotation finale comme la valeur de fréquence de rotation déterminée au moyen d'asservissement de la vitesse (6) pendant le saut alors qu'aucune donnée n'est lue.

8. Dispositif de commande de vitesse de disque selon la revendication 6, dans lequel le moyen de traitement de la vitesse (8) génère une accélération progressive de la valeur de la fréquence de rotation déterminée en fournissant successivement des valeurs de fréquence de plus en plus grandes au moyen d'asservissement de la vitesse (6) de sorte que lorsque le support d'information tourne à des fréquences plus élevées, les données peuvent être lues à une plus grande vitesse.

9. Lecteur et/ou enregistreur de disque optique **caractérisés en ce qu'**ils comprennent un dispositif de commande de vitesse de disque selon l'une quelconque des revendications 1 à 8.
